# FASCICULE DE BREVET EUROPEEN

(11) **EP 3 713 658 B1**
(45) Date de publication et mention de la délivrance du brevet: **12.01.2022**
(21) Numéro de dépôt: 18803703.0
(22) Date de dépôt: 22.11.2018
(51) Int. Cl.: B01D 53/32

(54) **PROCEDE DE PURIFICATION D'UN GAZ PORTEUR**
VERFAHREN ZUR REINIGUNG EINES TRÄGERGASES
METHOD FOR PURIFYING A CARRIER GAS

(30) Priorité: 24.11.2017 FR 1761173
(43) Date de publication de la demande: 30.09.2020
(73) Titulaire: UNIVERSITE GRENOBLE ALPES, 38400 Saint Martin d'Hères (FR)
(72) Inventeur: DESEURE, Jonathan, 73190 Challes Les Eaux (FR)
(74) Mandataire: Bronchart, Quentin
(86) Numéro de dépôt international: PCT/EP2018/082150
(87) Numéro de publication internationale: WO 2019/101828

(56) Documents cités:
- EP-A1- 3 037 151
- WO-A1-2007/110657
- FR-A1- 2 695 570
- US-A- 3 963 597
- US-A1- 2009 004 072
- FOULETIER J ET AL: "Electrically renewable and controllable oxygen getter", VACUUM, PERGAMON PRESS, GB, vol. 25, no. 7, 1 juillet 1975 (1975-07-01), pages 307-314, XP024678405, ISSN: 0042-207X, DOI: 10.1016/0042-207X(75)90731-9 [extrait le 1975-07-01] cité dans la demande

## Description

### DOMAINE TECHNIQUE

La présente invention concerne un procédé de purification d'un gaz porteur chargé en impuretés oxygénées. En particulier, l'invention concerne un procédé de purification d'un gaz porteur chargé en impuretés oxygénées mettant en œuvre une électro conversion desdites impuretés oxygénées.

L'invention est notamment mise en œuvre pour la purification de l'hydrogène chargé en monoxyde de carbone.

### ART ANTÉRIEUR

Les matériaux pièges à oxygène sont connus de l'homme du métier pour permettre une réaction de changement de degré d'oxydation (dite « électro conversion ») d'espèces chimiques, en particulier d'espèces chimiques oxygénées (aussi appelées « impuretés oxygénées »).

A cet égard, tel que décrit dans les documents [1] et [2] cités à la fin de la description, les matériaux piège à oxygène peuvent comprendre une solution solide d'oxyde métallique, en particulier de la zircone (dioxyde de zirconium), et encore plus particulièrement de la zircone stabilisée. En outre, les documents EP-A-03037151, FR-A-2695570 et US-A-2009/0004072 divulguent un art antérieur pertinent au domaine technique de l'invention.

L'électro conversion des espèces chimiques repose alors sur une différence de potentiel thermodynamique entre le matériau piège à oxygène au moins partiellement réduit et les espèces chimiques considérées.

Cette aptitude des matériaux piège à oxygène à permettre l'électro conversion d'impuretés oxygénées est particulièrement intéressante pour la purification d'un gaz porteur, notamment de l'hydrogène, comprenant des impuretés oxygénées.

Un tel procédé de purification du gaz porteur peut alors comprendre le passage dudit gaz au travers d'un filtre comprenant le matériau piège à oxygène, le filtre prenant la forme d'une céramique à porosité ouverte, ledit matériau piège à oxygène étant dans un état au moins partiellement réduit.

Le passage du gaz porteur au travers du filtre permet une mise en contact intime des impuretés oxygénées avec la céramique de sorte que le piégeage et/ou l'électro conversion desdites impuretés peut intervenir.

Cependant, ce procédé n'est pas satisfaisant.

En effet, les inventeurs ont noté une perte d'efficacité dans le temps du procédé du purification du gaz porteur. Cette perte d'efficacité est particulièrement dommageable puisqu'elle prévient toute utilisation en continu du procédé de purification du gaz porteur, qui pourrait notamment être requise pour la purification de l'hydrogène dans le domaine des piles à combustible.

La perte d'efficacité du procédé de purification est due d'une part à une saturation par des produits de l'électro conversion de la surface des grains de la céramique, et d'autre part à une inhomogénéité du degré d'oxydation au sein de chaque grain de ladite céramique.

Ces deux effets sont distincts et ne participent pas selon les mêmes modalités à la perte d'efficacité du procédé de purification.

En effet, la saturation de la surface des grains prévient tout contact intime entre lesdits grains et les impuretés oxygénées, limitant, voire empêchant, de facto l'électro conversion des impuretés oxygénées.

L'inhomogénéité du degré d'oxydation au sein des grains limite quant à elle la faculté de piégeage desdites impuretés.

Un but de la présente invention est de proposer un procédé de purification d'un gaz porteur chargé en impuretés oxygénées susceptible de fonctionner en continu.

Un autre but de la présente invention est de proposer un procédé de purification d'un gaz porteur chargé en impuretés oxygénées dans lequel la saturation du la surface des grains de la céramique est, au moins, limitée.

### EXPOSÉ DE L'INVENTION

Les buts de la présente invention sont, au moins en partie, atteints, par un procédé de purification d'un gaz porteur qui comprend des impuretés oxygénées dans un premier degré d'oxydation, le procédé de purification comprenant la circulation, avantageusement ininterrompue, du gaz porteur au travers et selon une direction XX' d'un filtre, le filtre étant fait d'un matériau piège à oxygène qui présente un potentiel d'oxydoréduction E°, et dont une première portion est dans un état d'oxydoréduction réduit et au sein de laquelle les impuretés oxygénées sont piégées et/ou passent du premier degré d'oxydation à un second degré d'oxydation, dans lequel le matériau piège à oxygène est une céramique qui présente une porosité ouverte, le procédé comprenant en outre l'application au filtre d'un potentiel électrique ΔV supérieur, en valeur absolue, au potentiel d'oxydoréduction E° lors d'un cycle de purification principal CP.

Selon un mode de mise en œuvre, le matériau piège à oxygène comprend en outre, selon la direction XX', une seconde portion non réduite contiguë à la première portion selon un front, dit front de réduction F, susceptible de se déplacer au détriment de la première portion dès lors que le filtre est traversé par un courant, dit courant de polarisation, lors du cycle de purification principal CP.

Selon un mode de mise en œuvre, au cours du cycle de purification principal CP, le potentiel électrique ΔV est également inférieur à un potentiel électrique prédéterminé ΔVₚ, le potentiel électrique prédéterminé ΔVₚ étant ajusté de sorte que la partie positive de la variation temporelle et par unité de surface du courant de polarisation soit inférieure à 20 mA/cm²/h.

Selon un mode de mise en œuvre, dès lors que l'extension de la première portion selon l'axe XX' dépasse une longueur prédéterminée lors du cycle de purification principal CP, le procédé de purification met en œuvre un cycle de régénération CR du filtre destiné à repositionner le front de réduction F à une valeur de choix, le cycle de régénération CR comprenant l'application d'un potentiel électrique ΔV supérieur au potentiel électrique prédéterminé ΔVₚ.

Selon un mode de mise en œuvre, le procédé de purification comprend également un cycle de rééquilibrage CRI destiné à rééquilibrer électro chimiquement les grains de la céramique, le cycle de rééquilibrage CRI comprenant la mise en court-circuit du filtre, avantageusement le cycle de rééquilibrage CRI est mis en œuvre dès lors que le taux de piégeage des impuretés oxygénées au niveau de la première portion est inférieur à un seuil.

Selon un mode de mise en œuvre, la céramique est maintenue à une température comprise entre 600 °C et 1100 °C.

Selon un mode de mise en œuvre, le potentiel électrique ΔV est appliqué par un générateur de tension aux deux extrémités du filtre.

Selon un mode de mise en œuvre, durant l'exécution du procédé de purification, le courant de polarisation est mesuré continûment.

Selon un mode de mise en œuvre, le matériau piège comprend une solution solide d'oxyde métallique, la solution solide d'oxyde métallique comprend en particulier une solution solide de ZrYO ou de ZrScO, ou une structure à base de ThO₂⁻ et de LaGaO₃⁻, avec ou sans double substitutions de Y₂O₃ ou Sc₂O₃ par du CeO₂ ou du AlO₃, ou un mélange 8(Y₂O₃)10(Al₂O₃).

Selon un mode de mise en œuvre, le gaz porteur comprend un gaz neutre, avantageusement le gaz neutre comprend de l'argon et/ou de l'azote.

Selon un mode de mise en œuvre, le gaz comprend de l'hydrogène ou de l'hélium.

Selon un mode de mise en œuvre, les impuretés oxygénées comprennent du monoxyde de carbone ou du monoxyde d'azote.

Selon un mode de mise en œuvre, les impuretés oxygénées comprennent H₂O, SO₂.

### BRÈVE DESCRIPTION DES DESSINS

D'autres caractéristiques et avantages apparaîtront dans la description qui va suivre du procédé purification d'un gaz porteur selon l'invention, donnés à titre d'exemples non limitatifs, en référence aux dessins annexés dans lesquels :

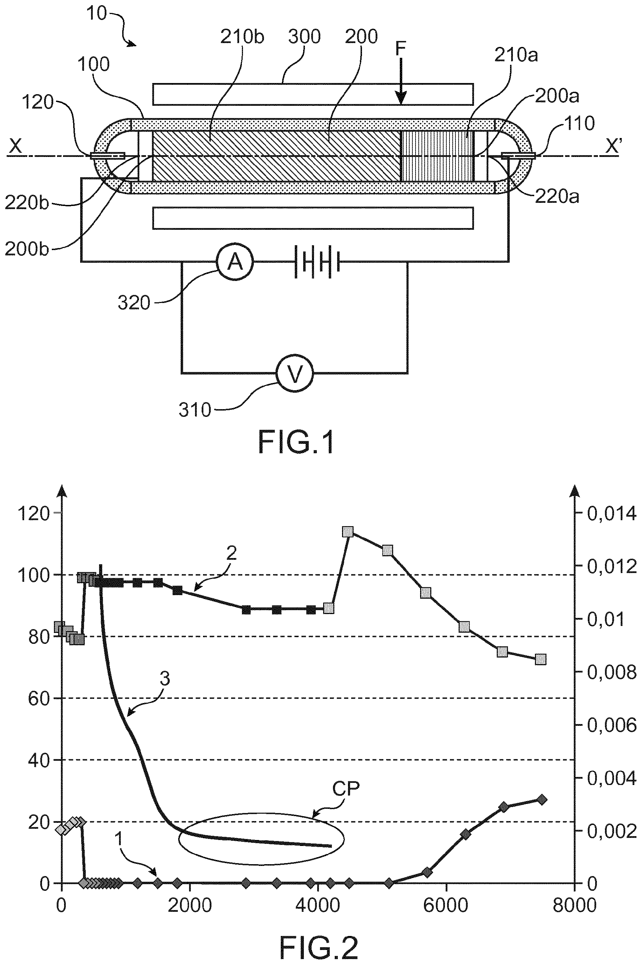

- la figure 1 est une représentation schématique d'un dispositif de purification de gaz selon un plan de coupe longitudinal (comprenant l'axe XX') susceptible d'être mis en œuvre dans le cadre de la présente invention ;
- la figure 2 est une représentation graphique, en fonction du temps (axe horizontal, en secondes), de l'évolution des performances du procédé selon la présente invention mis en œuvre pour la purification de l'hélium chargé à 80 ppm en monoxyde de carbone, le débit du gaz porteur étant de 3 litres par heure, en particulier les courbes 1 et 2 représentent respectivement les taux de CO et de CO2 en sortie de filtre (axe vertical de gauche en « % »), la ligne continue 3 représente le courant de polarisation parcourant le filtre (axe vertical de droite, en Ampères) ;

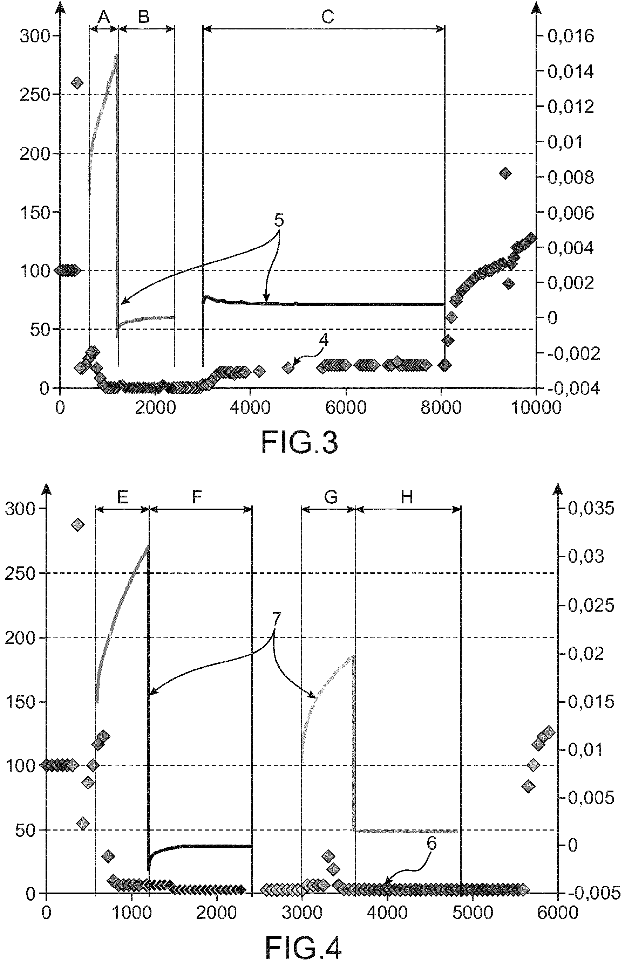

- la figure 3 est une représentation graphique, en fonction du temps (axe horizontal, en secondes), de l'évolution des performances du procédé selon la présente invention mis en œuvre pour la purification d'un mélange d'hélium et de 5% de dihydrogène chargé à 35 ppm en monoxyde de carbone, le débit du gaz porteur étant de 4 litres par heure, la courbe 4 représente le taux de CO en sortie de filtre (axe vertical de gauche en « % »), la courbe 5 représente le courant de polarisation parcourant le filtre (axe vertical de droite, en Ampères), en particulier, les zones A, B, et C représentent, respectivement, un cycle de régénération (potentiel électrique ΔV de -6 V), un cycle de rééquilibrage (filtre en court-circuit), et un cycle de purification principal (potentiel électrique ΔV de -1,5 V) ;
- la figure 4 est une représentation graphique, en fonction du temps (axe horizontal, en secondes), de l'évolution des performances du procédé selon la présente invention mis en œuvre pour la purification d'un mélange d'hélium et de 5% de dihydrogène chargé à 31 ppm en monoxyde de carbone, le débit du gaz porteur étant de 4 litres par heure, la courbe 6 représente le taux de CO en sortie de filtre (axe vertical de gauche en « % »), la courbe 7 représente le courant de polarisation parcourant le filtre (axe vertical de droite, en Ampères), en particulier, les zones E, F, G et H représentent, respectivement, un cycle de régénération (potentiel électrique ΔV de -6 V), un cycle de rééquilibrage (filtre en court-circuit), un cycle de régénération (potentiel électrique ΔV de -6 V) et un cycle de purification principal (potentiel électrique ΔV de -1,5 V).

### EXPOSÉ DÉTAILLÉ DE MODES DE RÉALISATION PARTICULIERS

La présente invention concerne un procédé de purification d'un gaz porteur chargé en impuretés oxygénées. Le procédé de purification met en œuvre la circulation du gaz porteur au travers d'un filtre fait d'un matériau piège à oxygène au moins partiellement réduit.

Le maintien du filtre dans un état au moins partiellement réduit par application d'un potentiel électrique permet d'assurer le piégeage et/ou l'électro conversion des impuretés oxygénées.

La figure 1 est une représentation schématique d'un dispositif de purification 10 de gaz porteur pouvant être mis en œuvre dans le cadre de la présente invention.

En particulier, le dispositif de purification 10 peut comprendre un conduit étanche 100, (par exemple une ampoule) pourvue d'une entrée 110 et d'une sortie 120 de gaz porteur.

Le conduit 100 est fait d'un matériau résistant aux hautes températures, par exemple à des températures pouvant atteindre 1000°C, voire 1200°C.

Un filtre 200 qui s'étend selon une direction XX' est positionné en ajustement dans le conduit 100. Le filtre 200 est fait d'un matériau piège à oxygène qui présente un potentiel d'oxydoréduction E°. En d'autres termes, le matériau piège à oxygène peut être sous différents degrés d'oxydation, en particulier sous un état réduit et un état non réduit, les deux états formant un couple d'oxydoréduction de potentiel d'oxydoréduction E.

Par « état réduit », on entend un état d'oxydoréduction réduit.

Par « état non réduit », on entend un état d'oxydoréduction non réduit, dont le degré d'oxydoréduction est supérieur à celui de l'état réduit.

Par « matériau piège à oxygène », on entend un matériau susceptible d'adsorber sur sa surface des éléments oxygénés et d'insérer l'oxygène dans son réseau cristallin, par exemple du monoxyde de carbone (CO) ou encore du monoxyde d'azote (NO), ou encore de l'eau ou du dioxyde de souffre.

Il est entendu que dès lors que le filtre 200 s'étend selon une direction XX', ledit filtre 200 comprend deux extrémités en alignement avec la direction XX', en particulier le filtre 200 comprend une extrémité amont 200a et une extrémité aval 200b. Ainsi, tout gaz porteur entrant dans le conduit 100 par l'entrée 110 traversera le filtre 200 de son extrémité amont 200a vers son extrémité aval 200b.

Par « positionné en ajustement », on entend un filtre 200 qui présente une forme conforme à une paroi intérieure du conduit contre lequel ledit filtre 200 est en appui. En d'autres termes, le positionnement en ajustement du filtre 200 dans le conduit 100 impose à tout gaz entrant dans ladite ampoule 100 de traverser ledit filtre 200.

De manière avantageuse, le filtre 200 peut être une céramique, en particulier une céramique à porosité ouverte. Il est entendu que la porosité ouverte permet le passage d'un flux gazeux au travers du filtre 200.

Une céramique comprend un ensemble de grains, faits du matériau piège à oxygène, soudés entre eux au niveau de joints de grain. La surface des grains accessible au gaz correspond à la surface, dite surface active, du filtre 200.

Un tel filtre 200, sous la forme d'une céramique à porosité ouverte, peut par exemple être obtenu par frittage d'une solution solide d'oxyde métallique, par exemple sous forme d'un barreau de longueur L selon la direction XX', et de section S.

Par « section S », on entend une surface définie par l'intersection du barreau avec un plan perpendiculaire à la direction XX'. La longueur L peut être comprise entre 20 mm et 40 mm. La section S peut être un disque de diamètre D compris entre 6 mm et 10 mm, par exemple 8 mm.

De manière avantageuse, la section S du barreau est dimensionnée de sorte que le rapport du débit de gaz porteur sur ladite section S est inférieur à 250 [m/h].

La solution solide d'oxyde métallique peut comprendre toutes les solutions solides de type ZrYO (par exemple de la zircone stabilisée avec 8% molaire d'yttrium) ou ZrScO, avec ou sans double substitutions (de Y₂O₃ ou Sc₂O₃ , soit par CeO₂ soit par AlO₃) mais aussi toutes les structures comme ThO₂⁻ et LaGaO₃⁻ similaires aux bases ZrO₂⁻, avec ou sans double substitutions (de Y₂O₃ ou Sc₂O₃ , soit par CeO₂ soit par AlO₃). On peut également citer les mélanges 8(Y₂O₃)10 (Al₂O₃).

A titre d'exemple, on peut utiliser une solution à base de Zirconium telle que Zr₁₋ₓYₓO_{2-x/2} ou Zr₁₋ₓScₓO_{2-x/2} pour x compris entre 0,03 et 0,11. On peut aussi utiliser une solution solide à double substitution, comme ZrO₂(0,86)Y₂O₃(0,1)CeO₂ (0,04) ou ZrO₂(0,9)Y₂O₃(0,09)CeO₂(0,01).

Par ailleurs, le dispositif de purification peut avantageusement comprendre des moyens de chauffage 300 destinés à chauffer le filtre 200 dès lors que le procédé de purification est mis en œuvre.

En particulier, les moyens de chauffage 300 peuvent comprendre un four tubulaire à l'intérieur duquel est insérée le conduit 100.

De manière avantageuse, les moyens de chauffage 300 sont adaptés pour permettre une élévation de température, avantageusement comprise entre 600°C et 1100°C, par exemple 850°C, du filtre 200.

Le filtre 200 comprend également une première portion 210a dans un état d'oxydoréduction réduit.

A l'issue du frittage, le filtre 200 peut être dans un état non réduit.

La formation de la première portion 210a peut alors être réalisée par réduction, au moins partielle, du filtre 200.

La réduction au moins partielle du filtre 200 peut alors être exécutée par application d'un potentiel électrique audit filtre 200.

A cet égard, le filtre 200 peut comprendre une électrode amont 220a et une électrode aval 220b, positionnées, respectivement, au niveau des extrémités amont 200a et aval 200b.

Les électrodes amont 220a et aval 220b sont avantageusement poreuses et peuvent être formées par application au pinceau d'une encre conductrice, en particulier une encre conductrice comprenant au moins une des matériaux choisi parmi : La₍₁₋ₓ₎SrₓMnO₃, La₍₁₋ₓ₎SrₓCoO₃, La₍₁₋ₓ₎SrₓFeO₃ (avec pour chacun de ces matériaux x compris 0,2 à 0,3), Pr_{(1-y)}Sr_{y}FeO₃ avec Y compris entre 0,2 à 0,5, LaNi_{0,6}Fe_{0,4}O₃, Ba_{0,5}Sr_{0,5}Co_{0,8}Fe_{0,2}O₃, Sm_{0,5}Sr_{0,5}CoO₃, Sr_{0,9}Ce_{0,1}Fe_{0,8}Ni_{0,2}O₃, La_{0,7}Sr_{0,3}Fe_{0,8}Ni_{0,2}O₃, La_{0,8}Sr_{0,2}Co_{0,8}Fe_{0,2}O₃, La_{0,6}Sr_{0,4}Co_{0,8}Mn_{0,2}O₃, La_{0,6}Sr_{0,4}Co_{0,9}Cu_{0,1}O₃, Pr_{0,8}Sr_{0,2}Co_{0,2}Fe_{0,8}O₃, Pr_{0,7}Sr_{0,3}Co_{0,2}Mn_{0,8}O₃, Pr_{0,6}Sr_{0,4}Co_{0,8}Fe_{0,2}O₃, Pr_{0,7}Sr_{0,3}Co_{0,9}Cu₀,₁O₃.

Les électrodes amont 220a et aval 220b peuvent également être connectées à un générateur de tension 310 destiné à imposer un potentiel électrique ΔV au filtre 200.

Le filtre 200 peut également comprendre, selon la direction XX', une seconde portion 210b non réduite contiguë à la première portion selon un front, dit front de réduction F. Nous verrons dans la suite de la description que le front de réduction F n'est pas figé et peut donc subir un déplacement sous l'action d'un courant de polarisation généré lors d'un cycle de purification principal CP du gaz porteur.

Le procédé selon la présente invention comprend alors la circulation d'un gaz porteur chargé en impuretés oxygénées à travers le filtre 200 de l'extrémité amont 200a vers l'extrémité aval 200b.

Les impuretés oxygénées présentent un premier état d'oxydation.

Les impuretés oxygénées peuvent comprendre du monoxyde de carbone et/ou du monoxyde d'azote.

Les impuretés oxygénées peuvent également comprendre au moins un des éléments choisi parmi : eau, dioxyde de souffre.

Par ailleurs, dès lors que les impuretés oxygénées s'écoulent, avec le gaz porteur, dans la première région elles sont piégées et/ou passent du premier degré d'oxydation à un second degré d'oxydation (électro conversion) différent du premier degré d'oxydation.

A cet égard, l'électro conversion du monoxyde de carbone conduit à la formation de dioxyde de carbone et de carbone selon la réaction électrochimique suivante :

2 CO **→** CO₂ + C

A l'issue de cette réaction, le dioxyde de carbone traverse le filtre 100 dans son entièreté, tandis que le carbone reste piégé au niveau de la première portion 210a.

Une mesure du taux de dioxyde de carbone en sortie de filtre 200 (extrémité aval 200b) permet d'avoir accès au taux d'électro conversion par rapport au piégeage direct du monoxyde de carbone dans la première région 210a.

La prépondérance de l'un ou l'autre de ces deux effets, à savoir le piégeage ou le changement de degré d'oxydation, dépend de la nature du gaz porteur.

A titre d'exemple, une électro conversion sera favorisée dès lors que le gaz porteur est un gaz neutre, par exemple de l'hélium, de l'argon , de neon, de Xenon ou de l'azote, tandis que le piégeage des impuretés oxygénées sera prédominant dès lors que le gaz porteur est ou comprend du dihydrogène ou un gaz réducteur (type méthane et alcanes).

Quoiqu'il en soit, quelle que soit la nature du gaz porteur, ces deux effets coexistent, et mènent à une accumulation soit de carbone (dès lors qu'il y a électro conversion des impuretés), soit de CO (dès lors qu'il y a piégeage des impuretés) au niveau de la première portion 200a. En particulier, la surface d'échange (ou surface active) de la première portion, sans autres précautions, se sature de sorte que la performance du procédé de purification diminue.

Pour pallier cette baisse de performance, les inventeurs proposent alors d'imposer un potentiel électrique ΔV au filtre 200.

En particulier, le potentiel électrique ΔV peut être appliqué au niveau des électrodes amont 220a et aval 220b, de manière à maintenir la première portion 210a dans un état réduit. En d'autres termes, le potentiel électrique ΔV est supérieur, en valeur absolue, au potentiel d'oxydoréduction E°.

La phase du procédé de purification selon la présente invention correspondant à l'application de ce potentiel électrique ΔV, dit également potentiel de polarisation, est dite cycle de purification principal CP.

L'application de ce potentiel de polarisation durant le cycle de purification principal CP permet de limiter, voire de prévenir, la saturation du piège 200, en particulier de la première portion 210a, et ainsi de considérer une circulation en continue du gaz porteur chargé en impuretés oxygénées.

Lors du cycle de purification principal CP, le front de réduction F, dès lors que la seconde portion 210b est considérée, est susceptible de se déplacer au détriment de la première portion dès lors que le filtre 200 est traversé par un courant, dit courant de polarisation, induit par l'électro conversion des impuretés oxygénées lors du cycle de purification principal CP.

Le déplacement du front de réduction correspond donc à une expansion de la seconde portion 210b au détriment de la première portion 210a. En d'autres termes, le courant de polarisation génère une oxydation électrochimique de la première portion 210a.

Cependant, le matériau de piège à oxygène se contractant lorsqu'il passe d'un état réduit à un non état réduit, il peut être préférable pour des raisons de tenue mécanique et/ou d'étanchéité du dispositif de purification 10 de maintenir une longueur appréciable de la seconde portion 210b.

Aussi, afin de limiter le déplacement du front de réduction F (ralentir sa vitesse de déplacement), la tension de polarisation, lors du cycle de purification principal, peut être maintenue à une valeur également inférieur à un potentiel électrique prédéterminé ΔVₚ. Par exemple, le potentiel électrique prédéterminé ΔVₚ est ajusté de sorte que la partie positive de la variation temporelle et par unité de surface du courant de polarisation soit inférieure à 20 mA/cm²/h.

A cet égard, le dispositif de purification 10 comprend également des moyens de mesure de l'intensité du courant 320 (par exemple un ampèremètre) parcourant le filtre 200, de manière, par exemple, à pouvoir mesurer de manière continue ledit courant.

En outre, dès lors que l'extension de la première portion selon l'axe XX' dépasse une longueur prédéterminée lors du cycle de purification principal CP, le procédé de purification met en œuvre un cycle de régénération CR du filtre destiné à repositionner le front de réduction F à une valeur de choix.

A cet égard, le cycle de régénération CR comprend l'application d'un potentiel électrique ΔV supérieur, en valeur absolue, au potentiel électrique prédéterminée ΔVₚ.

Le cycle de régénération CR est avantageusement déclenché dès lors que le courant de polarisation franchit à la baisse une valeur de courant seuil.

La valeur de courant seuil est, dans ce cas de figure, une valeur de courant en dessous de laquelle les performances du filtre ne sont plus satisfaisantes. A cet égard, les performances du filtre peuvent être déterminées par l'analyse quantitative des gaz en sortie de filtre 200, et/ou la mesure du courant de polarisation traversant le filtre 200 pendant l'exécution du procédé de purification.

En particulier, la valeur de courant seuil, qui est dépendante des caractéristiques morphologiques et géométriques du filtre 200, peut être déterminée empiriquement par l'homme du métier.

Le cycle de régénération CR peut être mis en œuvre pendant la purification du gaz porteur. En d'autres termes, la purification du gaz porteur n'est pas interrompue lors du cycle de régénération CR.

Les grains composant la céramique, notamment dans la première portion, peuvent présenter un déséquilibre électrochimique, en particulier à l'issue de la réduction destinée à former ladite première portion.

Par « déséquilibre électrochimique », on entend un degré d'oxydation non uniforme de la surface vers le volume des grains.

Ce déséquilibre électrochimique réduit la faculté de piégeage des grains.

Afin de pallier ce problème, le procédé de purification selon la présente invention peut également comprendre un cycle de rééquilibrage CRI destiné à rééquilibrer électro chimiquement les grains de la céramique. En effet comme observé sur la courbe 3 de la figure 2, si la céramique n'est pas rééquilibrée, elle présente une chute rapide du courant lors de l'application de la polarisation ΔVₚ. Une chute de courant présentant une pente supérieure à 100 mA/h, peut être révélatrice d'un déséquilibre des grains de la céramique.

Le cycle de rééquilibrage comprend alors la mise en court-circuit du filtre 200, générant ainsi la circulation d'un courant de rééquilibrage au travers du filtre 200. Un tel courant, observé au niveau des zones B et F, respectivement, des figures 3 et 4, est négatif et tend de manière asymptotique vers une valeur nulle. Les inventeurs considèrent que le rééquilibrage est satisfaisant dès lors que le courant de rééquilibrage est inférieur à 0,1 mA.

La figure 2 montre que, dès l'application d'un potentiel de polarisation ΔV de -1.5 V, un courant de polarisation apparait (courbe 3). Ce courant de polarisation, tel que précisé précédemment, résulte de l'électro conversion du monoxyde de carbone en dioxyde de carbone (détectée en sortie de filtre) et en carbone. On constate également, qu'en régime permanent (zone CP de la figure 2), autrement dit lorsque la variation du courant de polarisation se stabilise, l'électro conversion est d'au moins 80 % du CO contenu dans un gaz porteur neutre, et le reste du monoxyde de carbone est capturé par le filtre.

Les figures 3 et 4 montrent que dès lors que le gaz porteur comprend du dihydrogène, le piégeage est dominant au regard de l'électro conversion.

Le procédé de purification selon la présente invention permet la purification d'un gaz porteur en continue. En particulier, quel que soit le cycle considéré, le procédé de purification conserve les performances voulues.

### REFERENCES

[1] US3963597;
[2] J. Foultier et al., Vacuum, 25, 1975, 307.

## Revendications

1. Procédé de purification d'un gaz porteur qui comprend des impuretés oxygénées dans un premier degré d'oxydation, le procédé de purification comprenant la circulation, avantageusement ininterrompue, du gaz porteur au travers et selon une direction XX' d'un filtre (200), le filtre (200) étant fait d'un matériau piège à oxygène qui présente un potentiel d'oxydoréduction E°, et dont une première portion (210a) est dans un état d'oxydoréduction réduit et au sein de laquelle les impuretés oxygénées sont piégées et/ou passent du premier degré d'oxydation à un second degré d'oxydation, dans lequel le matériau piège à oxygène est une céramique qui présente une porosité ouverte,
le procédé étant **caractérisé en ce qu'**il comprend en outre l'application au filtre (200) d'un potentiel électrique ΔV supérieur, en valeur absolue, au potentiel d'oxydoréduction E° lors d'un cycle de purification principal CP.

2. Procédé selon la revendication 1, dans lequel le matériau piège à oxygène comprend en outre, selon la direction XX', une seconde portion (210b) non réduite contiguë à la première portion (210a) selon un front, dit front de réduction F, susceptible de se déplacer au détriment de la première portion (210a) dès lors que le filtre (200) est traversé par un courant, dit courant de polarisation, lors du cycle de purification principal CP.

3. Procédé selon la revendication 2, dans lequel, au cours du cycle de purification principal CP, le potentiel électrique ΔV est également inférieur à un potentiel électrique prédéterminé ΔVₚ, le potentiel électrique prédéterminée ΔVₚ étant ajustée de sorte que la partie positive de la variation temporelle et par unité de surface du courant de polarisation soit inférieure à 20 mA/cm²/h.

4. Procédé selon la revendication 2 ou 3, dans lequel dès lors que l'extension de la première portion (210a) selon l'axe XX' dépasse une longueur prédéterminée lors du cycle de purification principal CP, le procédé de purification met en œuvre un cycle de régénération CR du filtre (200) destiné à repositionner le front de réduction F à une valeur de choix, le cycle de régénération CR comprenant l'application d'un potentiel électrique ΔV supérieur au potentiel électrique prédéterminée ΔVₚ.

5. Procédé selon la revendication 3 ou 4, dans lequel le procédé de purification comprend également un cycle de rééquilibrage CRI destiné à rééquilibrer électro chimiquement les grains de la céramique, le cycle de rééquilibrage CRI comprenant la mise en court-circuit du filtre (200), avantageusement le cycle de rééquilibrage CRI est mis en œuvre dès lors que le piégeage des impuretés oxygénées au niveau de la première portion (210a) est inférieur à un taux de piégeage seuil.

6. Procédé selon l'une des revendications 2 à 5, dans lequel la céramique est maintenue à une température comprise entre 600 °C et 1100 °C.

7. Procédé selon l'une des revendications 2 à 6, dans lequel le potentiel électrique ΔV est appliqué par un générateur de tension (310) aux deux extrémités du filtre (200).

8. Procédé selon l'une des revendications 2 à 7, dans lequel durant l'exécution du procédé de purification le courant de polarisation est mesuré continûment.

9. Procédé selon l'une des revendications 1 à 8, dans lequel le matériau piège comprend une solution solide d'oxyde métallique, la solution solide d'oxyde métallique comprend en particulier une solution solide de ZrYO ou de ZrScO, ou une structure à base de ThO₂⁻ et de LaGaO₃⁻, avec ou sans double substitutions de Y₂O₃ ou Sc₂O₃ par du CeO₂ ou du AlO₃, ou un mélange 8(Y₂O₃)10(Al₂O₃).

10. Procédé selon l'une des revendications 1 à 9, dans lequel le gaz porteur comprend un gaz neutre, avantageusement le gaz neutre comprend de l'argon et/ou de l'azote.

11. Procédé selon l'une des revendications 1 à 10, dans lequel le gaz comprend de l'hydrogène ou de l'hélium.

12. Procédé selon l'une des revendications 1 à 11, dans lequel les impuretés oxygénées comprennent du monoxyde de carbone ou du monoxyde d'azote.

13. Procédé selon l'une des revendications 1 à 11, dans lequel, les impuretés oxygénées comprennent de l'eau ou du dioxyde de souffre.

## Patentansprüche

1. Verfahren zur Reinigung eines Trägergases, das oxygenierte Verunreinigungen in einem ersten Oxidationsgrad umfasst, wobei das Reinigungsverfahren die in vorteilhafter Weise ununterbrochene Zirkulation des Trägergases gemäß einer Richtung XX' und durch einen Filter (200) umfasst, wobei der Filter (200) aus einem sauerstoffaufnehmenden Material hergestellt ist, das ein Oxidations-Reduktions-Potenzial E° aufweist, und von dem ein erster Abschnitt (210a) in einem reduzierten Oxidations-Reduktions-Zustand ist und in dem die oxygenierten Verunreinigungen aufgenommen werden und/oder aus dem ersten Oxidationsgrad in einen zweiten Oxidationsgrad wechseln, wobei das sauerstoffaufnehmende Material eine Keramik ist, die eine offene Porosität aufweist,
wobei das Verfahren **dadurch gekennzeichnet ist, dass** es ferner die Anwendung eines elektrischen Potenzials ΔV auf den Filter (200) umfasst, das in absolutem Wert höher als das Oxidations-Reduktions-Potenzial E° bei einem Hauptreinigungszyklus CP ist.

2. Verfahren nach Anspruch 1, wobei das sauerstoffaufnehmende Material ferner gemäß der Richtung XX' einen nicht reduzierten zweiten Abschnitt (210b) umfasst, der gemäß einer Front, bezeichnet als Reduktionsfront F, an den ersten Abschnitt (210a) anstößt, die imstande ist, sich auf Kosten des ersten Abschnitts (210a) zu verlagern, sobald der Filter (200) beim Hauptreinigungszyklus CP von einem Strom, bezeichnet als Polarisationsstrom, durchquert wird.

3. Verfahren nach Anspruch 2, wobei während des Hauptreinigungszyklus CP das elektrische Potenzial ΔV ebenfalls niedriger als ein vorher festgelegtes elektrische Potenzial ΔVₚ ist, wobei das vorher festgelegte elektrische Potenzial ΔVₚ derart eingestellt ist, dass der positive Teil der Zeitvariation und je Oberflächeneinheit des Polarisationsstroms niedriger als 20 mA/cm²/h ist.

4. Verfahren nach Anspruch 2 oder 3, wobei, sobald die Erweiterung des ersten Abschnitts (210a) gemäß der Achse XX' beim Hauptreinigungszyklus CP eine vorher festgelegte Länge überschreitet, das Reinigungsverfahren einen Regenerationszyklus CR des Filters (200) durchführt, der bestimmt ist, die Reduktionsfront F auf einen gewählten Wert neuzupositionieren, wobei der Regenerationszyklus CR die Anwendung eines elektrischen Potenzials ΔV umfasst, das höher als das vorher festgelegte elektrische Potenzial ΔVₚ ist.

5. Verfahren nach Anspruch 3 oder 4, wobei das Reinigungsverfahren ebenfalls einen Neuäquilibrierungszyklus CRI umfasst, der bestimmt ist, die Körner der Keramik elektrochemisch neu zu äquilibrieren, wobei der Neuäquilibrierungszyklus CRI das Kurzschließen des Filters (200) umfasst, wobei der Neuäquilibrierungszyklus CRI in vorteilhafter Weise durchgeführt wird, sobald die Aufnahme der oxygenierten Verunreinigungen im Bereich des ersten Abschnitts (210a) unter einer Grenzaufnahmerate liegt.

6. Verfahren nach einem der Ansprüche 2 bis 5, wobei die Keramik auf einer Temperatur zwischen 600 °C und 1100 °C gehalten wird.

7. Verfahren nach einem der Ansprüche 2 bis 6, wobei das elektrische Potenzial ΔV von einem Spannungsgenerator (310) an zwei Enden des Filters (200) angelegt wird.

8. Verfahren nach einem der Ansprüche 2 bis 7, wobei der Polarisationsstrom während der Ausführung des Reinigungsverfahrens kontinuierlich gemessen wird.

9. Verfahren nach einem der Ansprüche 1 bis 8, wobei das Aufnahmematerial eine feste Metalloxidlösung umfasst, wobei die feste Metalloxidlösung insbesondere eine feste ZrYO- oder ZrScO-Lösung oder eine Struktur auf der Basis von ThO₂⁻ und von LaGaO₃⁻ umfasst, mit oder ohne doppelte Substitutionen von Y₂O₃ oder Sc₂O₃ durch CeO₂ oder AlO₃ oder ein Gemisch 8(Y₂O₃)10(Al₂O₃).

10. Verfahren nach einem der Ansprüche 1 bis 9, wobei das Trägergas ein neutrales Gas umfasst, wobei das neutrale Gas in vorteilhafter Weise Argon und/oder Stickstoff umfasst.

11. Verfahren nach einem der Ansprüche 1 bis 10, wobei das Gas Wasserstoff oder Helium umfasst.

12. Verfahren nach einem der Ansprüche 1 bis 11, wobei die oxygenierten Verunreinigungen Kohlenmonoxid oder Stickstoffmonoxid umfassen.

13. Verfahren nach einem der Ansprüche 1 bis 11, wobei die oxygenierten Verunreinigungen Wasser oder Schwefeldioxid umfassen.

## Claims

1. A method for purifying a carrier gas which comprises oxygenated impurities in a first degree of oxidation, the purification method comprising the circulation, advantageously uninterrupted, of the carrier gas through and in a direction XX' of a filter (200), the filter (200) being made of an oxygen trapping material which has a redox potential E°, and a first portion (210a) of which is in a reduced redox state and within which the oxygenated impurities are trapped and/or pass from the first degree of oxidation to a second degree of oxidation, in which the oxygen trapping material is a ceramic which has an open porosity,
the method being **characterised in that** it further comprises the application to the filter (200) of an electrical potential ΔV which is higher, in absolute value, than the redox potential E° during a main purification cycle CP.

2. The method according to claim 1, wherein the oxygen trapping material further comprises, in the direction XX', a second unreduced portion (210b) contiguous to the first portion (210a) along a front, called reduction front F, likely to be displaced to the detriment of the first portion (210a) as soon as the filter (200) is passed through by a current, called bias current, during the main purification cycle CP.

3. The method according to claim 2, wherein, during the main purification cycle CP, the electrical potential ΔV is also lower than a predetermined electrical potential ΔVₚ, the predetermined electrical potential ΔVₚ being adjusted such that the positive part of the temporal variation and per unit area of the bias current is less than 20 mA/cm²/h.

4. The method according to 2 or 3, wherein as soon as the extension of the first portion (210a) along the axis XX' exceeds a predetermined length during the main purification cycle CP, the purification method implements a cycle CR of regeneration of the filter (200) intended to reposition the reduction front F to a value of choice, the regeneration cycle CR comprising the application of an electrical potential ΔV greater than the predetermined electrical potential ΔVₚ.

5. The method according to claim 3 or 4, wherein the purification method also comprises a rebalancing cycle CRI intended to electrochemically rebalance the grains of the ceramic, the rebalancing cycle CRI comprising shorting the filter (200), advantageously the rebalancing cycle CRI is implemented as soon as the trapping of the oxygenated impurities at the first portion (210a) is below a threshold trapping rate.

6. The method according to one of claims 2 to 5, wherein the ceramic is maintained at a temperature comprised between 600°C and 1100°C.

7. The method according to one of claims 2 to 6, wherein the electrical potential ΔV is applied by a voltage generator (310) to both ends of the filter (200).

8. The method according to one of claims 2 to 7, wherein during the execution of the purification method, the bias current is measured continuously.

9. The method according to one of claims 1 to 8, wherein the trap material comprises a solid solution of metal oxide, the solid solution of metal oxide comprises in particular a solid solution of ZrYO or ZrScO, or a ThO₂⁻ and LaGaO₃⁻ based structure, with or without double substitutions of Y₂O₃ or Sc₂O₃ by CeO₂ or AlO₃, or a mixture of 8(Y₂O₃)10(Al₂O₃).

10. The method according to one of claims 1 to 9, wherein the carrier gas comprises a neutral gas, advantageously the neutral gas comprises argon and/or nitrogen.

11. The method according to one of claims 1 to 10, wherein the gas comprises hydrogen or helium.

12. The method according to one of claims 1 to 11, wherein the oxygenated impurities comprise carbon monoxide or nitrogen monoxide.

13. The method according to one of claims 1 to 11, wherein the oxygenated impurities comprise water or sulphur dioxide.
